# EUROPEAN PATENT SPECIFICATION

(11) **EP 0 641 967 B1**
(45) Date of publication and mention of the grant of the patent: **05.11.1997**
(21) Application number: 94113629.3
(22) Date of filing: 31.08.1994
(51) Int. Cl.: F21M 3/05

(54) **Lighting device, particularly for motor vehicles**
Beleuchtungsvorrichtung, insbesondere für Kraftfahrzeuge
Dispositif d'éclairage, en particulier pour véhicules automobiles

(30) Priority: 03.09.1993 IT TO930644
(43) Date of publication of application: 08.03.1995
(73) Proprietor: MAGNETI MARELLI S.p.A., 20145 Milano (IT)
(72) Inventor: Masuelli, Stefania, I-10043 Orbassano (IT); Perlo, Piero, I-12048 Sommariva del Bosco (IT)
(74) Representative: Jorio, Paolo, Dr. Ing.

(56) References cited:
- EP-A- 0 306 068
- EP-A- 0 584 547
- DE-A- 4 215 584
- PATENT ABSTRACTS OF JAPAN vol. 16, no. 477 (M-1320) 5 October 1992 & JP-A-04 173 440 (NISSAN MOTOR CO LTD) 22 June 1992

## Description

The present invention relates to a lighting device particularly suitable for use in the field of motor vehicles, for the construction of headlamps or optical systems of various types, for example.

The distribution of the light flux emitted from certain lighting devices, for example from headlamps of motor vehicles, has to meet particular requirements, especially in respect of the intensity and direction of the radiation emitted, in order to provide correct illumination and to conform with the stipulations of laws and regulations of various types.

A predetermined distribution of the light flux (in respect of both he direction of the rays emitted and their intensity) in the space outside the lighting device is normally achieved by means of conventional optical means comprising prisms and lenses of various types, which modify, by refraction and/or by total reflection, the direction of the light rays which fall on these means; in some cases, the prisms and lenses are formed directly in the screens which frontally delimit the lighting device.

This category includes lighting devices which typically use a parabolic reflecting surface and a prismatic surface. In the particular case of what are known as elliptical headlamps, the reflector has an inner reflecting surface which is normally produced by rotation of an arc of an ellipse about an axis (ellipsoid of rotation). The source of light radiation is disposed opposite the first focus of the ellipsoid and, therefore, the rays emitted from the source and falling on the surface of the reflector are focused at the second focus in whose plane is disposed a diaphragm of suitable form; the headlamp also comprises a lens disposed after the said diaphragm, on which lens the light radiation from the second focus of the ellipsoid falls to generate the outgoing light flux with a suitable distribution of light.

Devices of the type described, comprising optical refracting and reflecting means, are structurally rather complex, owing to the high number of their component parts and to the shape of some of them. Moreover, particularly in the case of elliptical headlamps, the optical efficiency is particularly low (of the order of 30%). Furthermore, such devices have large overall dimensions, particularly in the direction of the optical axis, and additional operations, which have to be executed with particular care, are required to fit them on the body of the vehicle.

Holographic optical systems have also been proposed to control the light flux emitted from a headlamp for motor vehicles; two different optical systems of this type are described in US Patents nos. 4,713,738 and 4,722,037.

The first of these patents describes a headlamp comprising a reflector within which a light source is disposed and on whose surface a three-dimensional holographic optical element is disposed, in such a way that the light emitted from the source falls on the said element and is simultaneously diffracted and reflected by it towards the space outside the lighting device. The holographic optical element used in the headlamp described in this patent is a three-dimensional holographic optical element in which the diffractive action takes place during passage through the element which has a certain thickness, this action providing a true modulation of the refractive index. Suitable materials for the construction of three-dimensional holographic means of this type are, as is known, gelatins impregnated with suitable substances (dichromate), photosensitive polymerizable monomers, photographic emulsions, and others.

Lighting devices, particularly headlamps, constructed by the methods described in the cited patent have numerous disadvantages; in the first place, control of the intensity and direction of the light radiation emitted by the device is possible only over a very narrow range. Moreover, the material required for the construction of three-dimensional holographic optical elements is expensive, typically unstable and requires a suitable supporting element for its use in all cases.

The second cited patent describes a lighting device for motor vehicles, provided with two different sources of monochromatic light and a transparent screen on which is disposed a holographic optical element. This element is designed to have a different diffractive effect on the two light fluxes emitted from each of the sources, so that the flux emitted from the first source leaves the device in one direction, while that emitted from the other source leaves the device in a different direction. The lighting device constructed according to this second patent, in addition to having the disadvantages mentioned previously with reference to the first of the two cited patents, is suitable for use only with monochromatic light.

The object of the present invention is to provide a lighting device, particularly for motor vehicles, which is free of the disadvantages mentioned previously; which can be used to obtain a predetermined spatial distribution of the light flux emitted from the device, controllable over a very wide range; which may be constructed in a simple way and inexpensively and which has a high stability of the physical and geometrical, and consequently optical, characteristics in the various units produced.

This object is attained with a lighting device, particularly for the construction of a motor vehicle headlamp, comprising at least one source of light radiation and capable of generating a light flux having a desired distribution of intensity, within a predetermined solid angle, characterized in that it comprises at least one diffractive surface interposed on the path followed by the said light radiation within the said device, the said diffractive surface being of the phase modulation type comprising a plurality of diffractive projections having a height substantially lying between the wavelength of the said light radiation and several tens of the wavelength of the said radiation.

To enable the structure of the lighting device according to the present invention and its operating procedures to be more clearly understood, a more detailed description of this will now be given by way of example, with reference to the attached drawings, in which:
Figure 1 is a schematic vertical section through a headlamp for motor vehicles, made according to the concept of the present invention;
Figures 2, 3, and 4 are sections through diffractive elements used in the headlamp shown in Figure 1, showing profiles of the diffractive surface which are binary, multiple-level and continuous (multiple-order) respectively, usable in either one-dimensional or two-dimensional diffractive structures;
Figure 5 is a perspective view, schematic and in partial section, of a binary two-dimensional diffractive element used in the optical devices according to the invention;
Figure 6 shows sections through diffractive elements which may be used to form a spherical diffractive lens, comprising diffractive surfaces which are, respectively, purely binary (a), binary multiple-level (b) and continuous (multiple-order) of the first order (c).
Figure 7 is a view of a mask used to obtain a purely binary diffractive surface which is a combination of a spherical lens and a cylindrical lens;
Figure 8 is a schematic section through a further diffractive element used in the device according to the invention;
Figure 9 is a schematic section through another diffractive element used in the device according to the invention;
Figure 10 is a graph showing the control of the light flux emitted from the element 9;
Figure 11 is a schematic front elevation of a headlamp for motor vehicles, constructed according to the concept of the present invention; and
Figures 12, 13 and 14 are schematic vertical sections, similar to those in Figure 1, through a headlamp for motor vehicles corresponding to different embodiments of the device according to the invention.

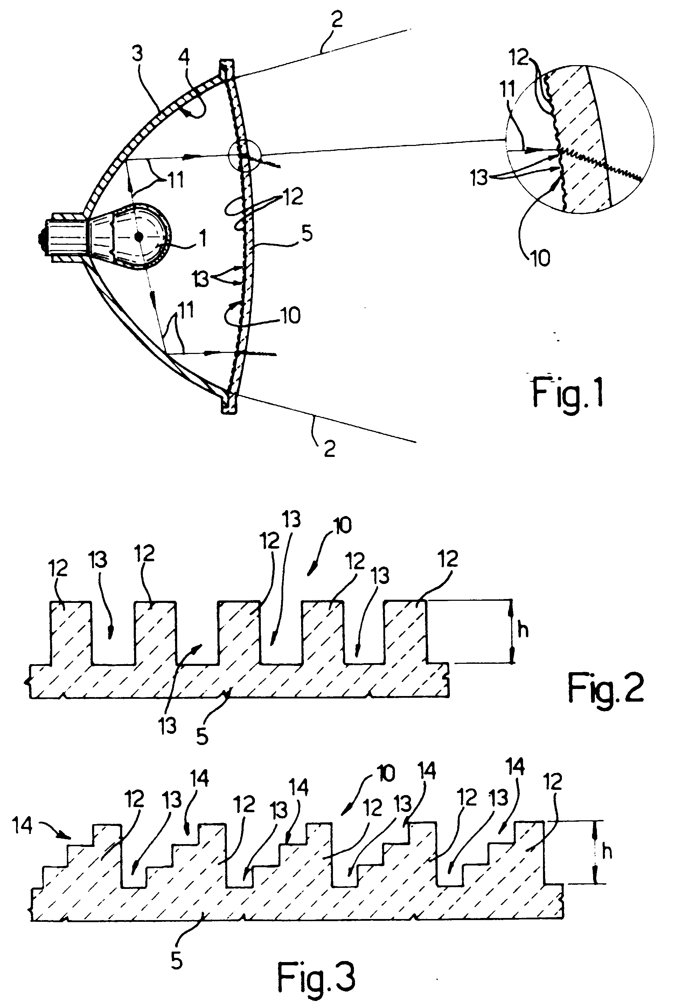

The lighting device according to the invention is particularly suitable for making a headlamp for motor vehicles of the type shown in Figures 1, 12, 13 and 14; it may also be used to make lighting devices of different types used inside a motor vehicle or to make lighting devices designed for applications in fields other than the automotive field.

With reference initially to Figure 1, which shows schematically a section through a headlamp for motor vehicles, the lighting device according to the invention comprises at least one source of light radiation 1, for example a lamp, and is capable of generating a light flux over a predetermined area subtending the flux and within a solid angle indicated by the number 2 in Figure 1.

The headlamp may conveniently comprise simply one light reflector 3 provided with an inner reflecting surface 4, together with a front cover screen 5, constructed from a transparent material.

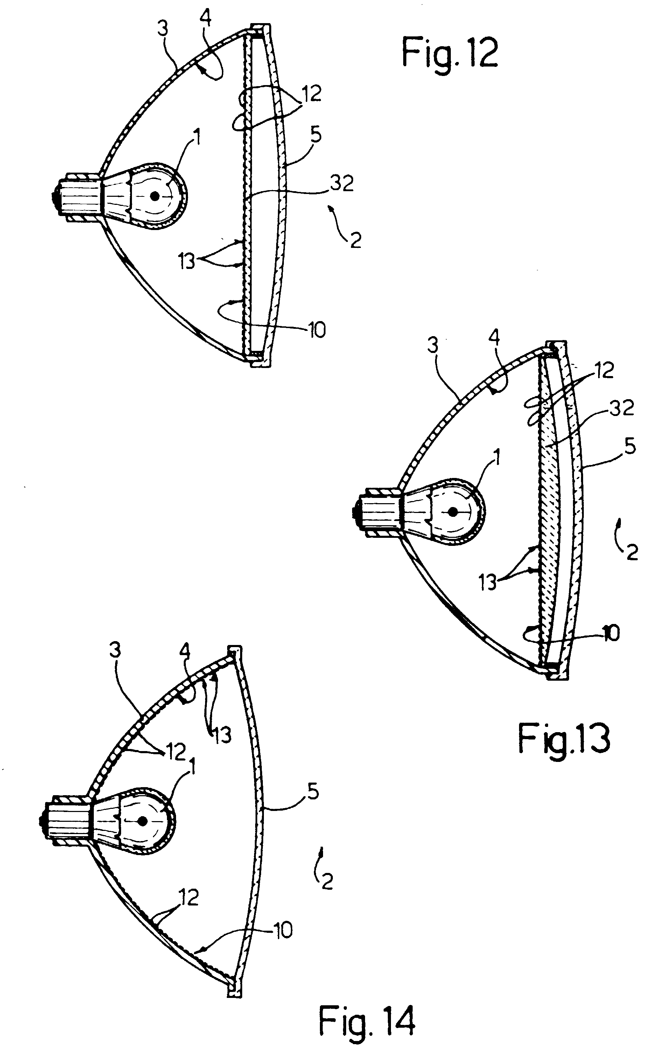

According to the invention, the headlamp comprises a diffractive surface 10 which is interposed on the path of the light radiation 11 emitted from the source 1 inside the headlamp; in the case of the headlamp in the embodiment shown in Figure 1, this light radiation emitted by the lamp is reflected by the surface 4 and directed towards the cover screen 5. In this embodiment, the said diffractive surface consists of the surface delimited internally by the screen 5. Alternatively, the surface 4 may be non-reflective, and only the direct radiation from the lamp 1 may fall on the diffractive surface 10. As will be described with reference to Figures 12, 13 and 14, the diffractive surface 10 may be formed on other elements and parts of the headlamp, rather than on the cover screen 5.

According to the invention, the diffractive surface 10 is of the phase modulation type; it therefore comprises a plurality of diffractive projections 12, some of which are shown in Figures 2 to 6. The height of the said projections (indicated by the letter h in Figures 2, 3 and 4) lies between the wavelength of the light radiation emitted from the source and several tens of the wavelength of the radiation. Consequently, if the light radiation is that of the lamp of a motor vehicle headlamp, the height h may fall within a range from approximately 0.3 micron to 100 microns. The resulting optical elements may have a purely diffractive action for smaller heights or a hybrid diffractive/refractive action for greater heights.

Some forms and profiles of the diffractive projections, capable of providing a diffractive surface of the phase modulation type, are shown in Figures 2 to 6.

In the first place, the diffractive surface 10 may be a diffractive surface of the purely binary type, as shown in Figures 2, 5 and 6a, which show sections of portions of the cover screen 5 of the headlamp shown in Figure 1, on whose inner surface are formed the diffractive projections 12; each of these is perpendicular with respect to the surface 10 from which it originates, and is separated from adjacent projections by grooves 13; the height h of the various projections is the same and is of the order of the wavelength of the light radiation emitted by the source 1; if this is that of a lamp of a motor vehicle headlamp the height is of the order of a micron or a fraction thereof. The other geometrical dimensions of the projections 12 may be chosen appropriately in order to provide, by means of the diffractive effect of the surface, a predetermined distribution of light intensity within the solid angle 2.

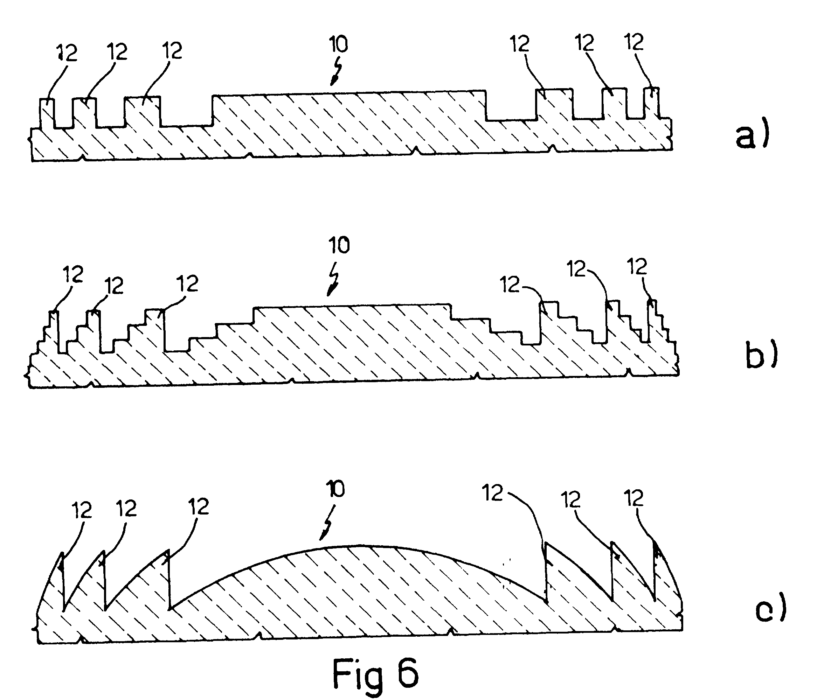

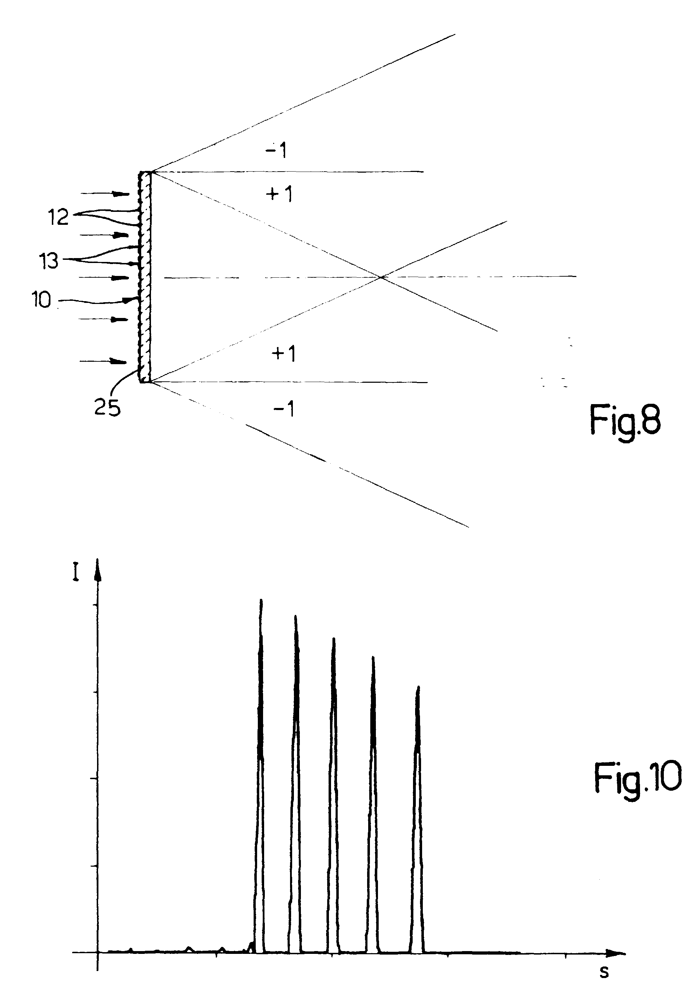

Configurations of this type may be obtained by using known masks, for example of the same type as that shown in Fig. 7, which is designed to generate a diffractive element comprising a cylindrical lens and a spherical lens (like that in Fig. 6a, for example).

The diffractive surface 10 may be of the same type as that shown in the section in Figure 3, known as a diffractive surface of the multiple-level binary type, in other words one in which each projection 12 has a stepped profile 14.

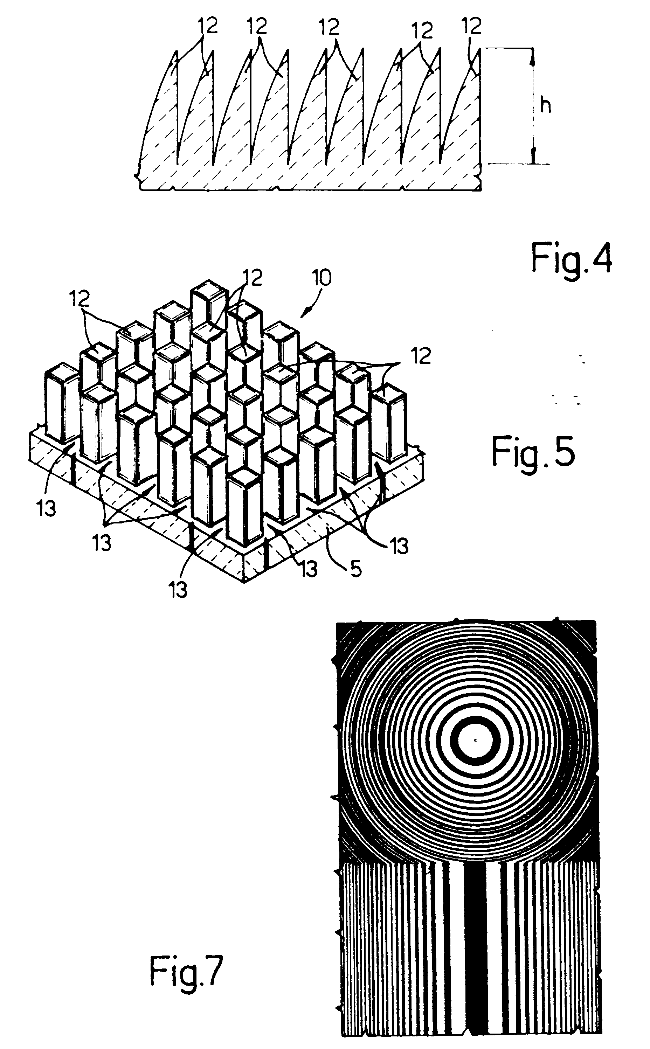

Although the diffractive surfaces 10 may also be of the one-dimensional type, they are normally of the two-dimensional type, i.e. in which each projection 12 is separated from the adjacent projections by grooves 13 which separate the projections in two orthogonal directions, as clearly shown in Figure 5 which is a perspective view of a two-dimensional binary diffractive surface.

The diffractive surface 10 may be of the type known as a diffractive surface with a continuous (multiple-order) profile shown in Fig. 4; this diffractive surface has projections whose profiles are shaped as seen in the figure, one side of the profile being shaped substantially as an arc of a curved line, normally a parabola. In this case, the height h of the diffractive projections 12 is of the order of several tens of the wavelength of the light radiation, and therefore when the source 1 consists of a lamp of a headlamp for motor vehicles, this height is of the order of a few tens of microns. A multiple-order diffractive surface of the type described may be obtained by using a grey level mask, which is well known in the art (not illustrated).

According to the invention, the disposition of the projections 12 on a two-dimensional diffractive surface may be symmetrical or asymmetrical and may have any other configuration. In particular, according to the invention, the diffractive configuration of the surface 10 may comprise a set of projections with circular symmetry (as in the case of the lenses shown in Fig. 6), asymmetrical in any way or linear, or a combination of these. The profile of these projections may be purely binary (Figs. 2 and 6a), binary multiple-level (Figs. 3 and 6b), continuous, of the first order or multiple-order (Figs. 4 and 6c).

The surface 10 may therefore consist of diffractive elements such as prisms, spherical lenses, cylindrical lenses, aspherical elements, multiple-order lattices and multiple-focus elements.

It has been found that, even in the presence of purely binary diffractive elements, the chromatic dispersion of the light beam generated by the device is controllable at the design values. It has also been found that, in the presence of multiple-order diffractive elements with m > 50, no design precautions are required to control the chromatic dispersion.

The device according to the invention may also comprise elements of the type indicated by 25 and illustrated in Fig. 8; this element comprises a purely binary diffractive surface 10 (forming a spherical or cylindrical lens) which is capable of emitting light radiation belonging to both positive and negative symmetrical orders of diffraction. Fig. 8 shows the rays corresponding to the first order of diffraction, both positive and negative. It is clear from this figure that an observer in the space outside the device will see a light flux which comprises the light radiation belonging not only to the positive orders of diffraction, but also that belonging to the negative orders of diffraction; therefore the light radiation belonging to the negative orders of diffraction also converges to a significant extent in the useful solid angle to generate the light flux.

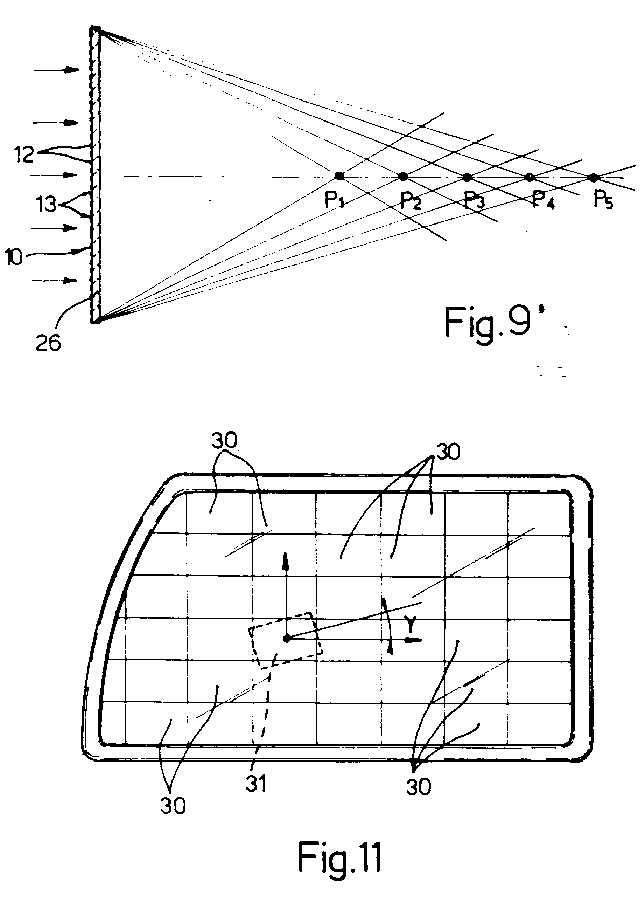

The device according to the invention may also comprise elements of the type indicated by 26 and illustrated in Fig. 9, this element comprising a diffractive surface 10 capable of producing a combination of multiple-focus lenses capable of focusing desired portions of the light flux emitted by the element at predetermined points P₁ ... P₅ on an optical axis. In this way, it is possible to distribute the light flux at the said points according to a predetermined law, for example with a linear progression, as shown in the graph in Fig. 10 which shows the distribution of the light intensity 1 at the five said points as a function of a co-ordinate s measured along the optical axis.

According to the invention, the diffractive surface 10 may comprise a combination of diffractive elements of one of the types indicated previously or of diffractive elements made by using projections 12 which have one or more of the diffractive profiles described, or combine these projections in various ways, these diffractive elements being disposed adjacent to each other, as is clearly visible in Figure 11, which shows the frontal covering screen of a headlamp, each of these diffractive elements, indicated by 30 being able to belong to one of the types defined previously; at least one of these elements may be orientated so as to form a predetermined angle γ with an adjacent element, as shown for the element 31. The diffractive surface 10 may thus comprise a predetermined configuration of projections 12 of one of the types described previously, some of which resemble cylindrical or spherical lenses, prisms, multiple-focus lenses or multiple-order symmetrical or asymmetrical lattices. The headlamp may comprise, in addition to the diffractive surface 10, other conventional optical elements of the refractive type.

The diffractive surface 10, instead of consisting of a surface which delimits the frontal screen 5 of the headlamp as shown in Figure 1, may be formed on one surface of a supporting screen 32 of transparent material (Figure 12) disposed between the source of light radiation 1 and the covering screen 5. The supporting screen may be shaped to form a refracting lens, as illustrated in the embodiment shown in Figure 13. Alternatively, the diffractive surface may consist of the reflecting surface 4 (Fig. 14) of the reflector 3 on which the diffractive projections 12 may be formed directly.

According to the invention, it has been found that, if a diffractive phase modulation surface of the type described previously and made with a particular design of the diffractive projections 12 is disposed on the path of the light radiation between the source and the space outside the lighting device, the light flux emitted from the device within a desired solid angle, such as that indicated by 2 in Fig. 1, has a predetermined distribution of light intensity. This predetermined distribution of light intensity may be obtained simply by appropriate selection of the profile and dimensions of the diffractive projections 12 and of the other optical elements associated with the diffractive surface 10. Consequently, the light flux emitted from the device may be precisely controlled by using simple structures which can be made with only a few stages of manufacture and whose physical and geometrical characteristics may be obtained in a very precise way in all the units produced and kept substantially unchanged during the use of the device.

The components of the optical device according to the invention in which the diffractive surface 10 is formed may be simply moulded according to known processes. In particular, these components may be constructed from a plastic material disposed in a mould whose die is provided with projections capable of generating the diffractive projections 12 of the diffractive surface 10. If the diffractive projections 12 have a maximum height of a few microns, the said die may be made with standard known methods of microelectronics.

If, however, the diffractive projections 12 have a height of the order of a few tens of microns, the die may be prepared by the exposure of photopolymeric compositions through grey level masks. Alternatively, for simple compositions (linear or capable of forming by rotation) the projections may be obtained by means of methods for mechanical removal of material (diamond turning).

It is clear that modifications and variations may be made to the described embodiments of the present invention without departure from the scope of the said invention.

## Claims

1. Lighting device, particularly for the construction of a motor vehicle headlamp, comprising at least one source of light radiation (1) and capable of generating a light flux having a desired distribution of intensity within a predetermined solid angle (2), characterized in that it comprises at least one diffractive surface (10) interposed on the path followed by the said light radiation within the said device, the said diffractive surface being of the phase modulation type, comprising a plurality of diffractive projections (12) having a height (h) substantially lying between the wavelength of the said light radiation and several tens of the wavelength of the said radiation.

2. Lighting device according to Claim 1, characterized in that at least part of the said diffractive surface (10) is of the binary type, in which the said diffractive projections (12) have the same height (h) of the order of the wavelength of the said light radiation.

3. Lighting device according to Claim 2, characterized in that at least part of the said diffractive surface (10) is of the multiple-level binary type.

4. Lighting device according to Claim 2 or 3, characterized in that the said binary diffractive surface (10) is of the two-dimensional type.

5. Lighting device according to Claim 1, characterized in that the said diffractive surface is of the continuous multiple-order type (10) in which the said diffractive projections (12) have a height of the order of several tens of the wavelength of the said light radiation.

6. Lighting device according to one of the preceding claims, characterized in that the said diffractive surface (10) comprises at least one purely binary portion of diffractive surface capable of emitting, in the said predetermined solid angle, light radiation belonging to the positive and negative symmetrical orders of diffraction, thus also using the light radiation belonging to the negative orders of diffraction for the generation of the said flux.

7. Lighting device according to one of the preceding claims, characterized in that the said diffractive surface (10) comprises at least one portion of diffractive surface capable of forming a combination of multiple-focus lenses capable of focusing desired portions of the said light flux at predetermined points on an optical axis.

8. Lighting device according to one of the preceding Claims 1 to 7, characterized in that the said diffractive surface (10) comprises a combination of diffractive elements disposed adjacent to each other, each of which has projections of one of the types defined by one of Claims 2 to 5.

9. Lighting device according to one of the preceding claims, characterized in that it comprises a combination of the said portions of diffractive surfaces (10) of one of the types defined by one of Claims 6 and 7.

10. Lighting device according to Claim 8 or 9, characterized in that at least one of the said diffractive elements is orientated so that it forms a predetermined angle with an adjacent element.

11. Lighting device according to one of the preceding claims, capable of being used to construct a motor vehicle headlamp, comprising a reflector (3) within which the said source of light radiation (1) is disposed and which is covered frontally by a screen (5) of transparent material, characterized in that the said projections (12) of the said diffractive surface (10) are formed on the inner surface of the said screen (5) of transparent material.

12. Lighting device according to one of Claims 1 to 10, capable of being used to construct a motor vehicle headlamp, comprising a reflector (3) within which the said source of light radiation (1) is disposed and which is covered frontally by a covering screen (5) of transparent material, characterized in that the said projections (12) of the said diffractive surface (10) are formed on one surface of a supporting screen (32) of transparent material disposed between the said source of light radiation and the said covering screen.

13. Lighting device according to Claim 12, characterized in that the said supporting screen (32) is shaped to form a refracting lens.

14. Lighting device according to one of Claims 1 to 10, capable of being used to construct a motor vehicle headlamp, comprising a reflector (3) within which the said source of light radiation (1) is disposed and which is covered frontally by a screen (5) of transparent material, characterized in that the said projections (12) of the said diffractive surface (10) are formed on the inner reflecting surface of the said reflector.

15. Lighting device according to one of the preceding claims, characterized in that the said diffractive projections (12) of the said diffractive surface (10) are formed on a supporting element made of plastic material.

## Patentansprüche

1. Beleuchtungseinrichtung, insbesondere für den Aufbau eines Kraftfahrzeugscheinwerfers, umfassend mindestens eine Strahlungslichtquelle (1), die einen Lichtfluß mit einer gewünschten Intensitätsverteilung innerhalb eines vorbestimmten festen Winkels (2) erzeugen kann, dadurch gekennzeichnet, daß sie mindestens eine brechende Oberfläche (10) umfaßt, die in dem von der Lichtstrahlung durchlaufenen Pfad innerhalb der Einrichtung eingefügt ist, welche brechende Oberfläche vom Phasenmodulationstyp ist, umfassend eine Mehrzahl von brechenden Fortsätzen (12) mit einer Höhe (h), die im wesentlichen zwischen der Wellenlänge der Lichtstrahlung und mehreren zehn Wellenlängen der Lichtstrahlung liegt.

2. Beleuchtungseinrichtung nach Anspruch 1, dadurch gekennzeichnet, daß mindestens ein Teil der brechenden Oberfläche (10) vom binären Typ ist, bei dem die brechenden Fortsätze (12) dieselbe Höhe (h) in der Größenordnung der Wellenlänge der Lichtstrahlung haben.

3. Beleuchtungseinrichtung nach Anspruch 2, dadurch gekennzeichnet, daß mindestens ein Teil der brechenden Oberfläche (10) vom Mehrpegel-Binärtyp ist.

4. Beleuchtungseinrichtung nach Anspruch 2 oder 3, dadurch gekennzeichnet, daß die binäre brechende Oberfläche (10) vom zweidimensionalen Typ ist.

5. Beleuchtungseinrichtung nach Anspruch 1, dadurch gekennzeichnet, daß die brechende Oberfläche vom kontinuierlichen Mehrordnungstyp (10) ist, bei dem die brechenden Fortsätze (12) eine Höhe in der Größenordnung mehrerer zehn Wellenlängen der Lichtstrahlung haben.

6. Beleuchtungseinrichtung nach einem der vorangehenden Ansprüche, dadurch gekennzeichnet, daß die brechende Oberfläche (10) mindestens einen rein binären Abschnitt der brechenden Oberfläche umfaßt, fähig zur Emission von Lichtstrahlung in dem vorbestimmten festen Winkel, die zu der positiven bzw. negativen symmetrischen Ordnung von Brechungen gehören, so daß auch Lichtstrahlung nutzbar wird, die zu den negativen Ordnungen der Brechung für die Erzeugung des Flußes verwendet werden.

7. Beleuchtungseinrichtung nach einem der vorangehenden Ansprüche, dadurch gekennzeichnet, daß die brechende Oberfläche (10) mindestens einen Abschnitt der brechenden Oberfläche umfaßt, der in der Lage ist, eine Kombination von Multifokuslinsen zu bilden, in der Lage, gewünschte Abschnitte des Lichtflußes auf vorbestimmte Punkte einer optischen Achse zu fokussieren.

8. Beleuchtungseinrichtung nach einem der vorangehenden Ansprüche 1 bis 7, dadurch gekennzeichnet, daß die brechende Oberfläche (10) eine Kombination von brechenden Elementen umfaßt, die benachbart zueinander angeordnet sind, von denen jedes Fortsätze eines der von einem der Ansprüche 2 bis 5 definierten Typen aufweist.

9. Beleuchtungseinrichtung nach einem der vorangehenden Ansprüche, dadurch gekennzeichnet, daß sie eine Kombination der Abschnitte von brechenden Oberflächen (10) einer der von Ansprüchen 6 und 7 definierten Typen aufweist.

10. Beleuchtungseinrichtung nach Ansprüchen 8 oder 9, dadurch gekennzeichnet, daß zumindest eines der brechenden Elemente so orientiert ist, daß es einen vorbestimmten Winkel mit einem benachbarten Element bildet.

11. Beleuchtungseinrichtung nach einem der vorangehenden Ansprüche, geeignet zur Verwendung beim Aufbau eines Kraftfahrzeugscheinwerfers, umfassend einen Reflektor (3), in dem die Lichtstrahlungsquelle (1) angeordnet ist, und der frontal durch eine Scheibe (5) aus transparentem Material abgedeckt ist, dadurch gekennzeichnet, daß die Fortsätze (12) der brechenden Oberfläche (10) auf der Innenoberfläche der Scheibe (5) aus transparentem Material ausgebildet sind.

12. Beleuchtungseinrichtung nach einem der Ansprüche von 1 bis 10, geeignet zur Verwendung beim Aufbau eines Kraftfahrzeugscheinwerfers, umfassend einen Reflektor (3), in dem die Lichtstrahlungsquelle (1) angeordnet ist und der frontal durch eine Abdeckscheibe (5) aus transparentem Material abgedeckt ist, dadurch gekennzeichnet, daß die Fortsätze (12) der brechenden Oberfläche (10) auf einer Oberfläche eines Stützschirmes (32) aus transparentem Material ausgebildet sind, der zwischen der Lichtstrahlungsquelle und der Abdeckscheibe angeordnet ist.

13. Beleuchtungseinrichtung nach Anspruch 12, dadurch gekennzeichnet, daß der stützende Schirm (32) zur Bildung einer brechenden Linse geformt ist.

14. Beleuchtungseinrichtung nach einem der Ansprüche von 1 bis 10, geeignet zur Verwendung beim Aufbau eines Kraftfahrzeugscheinwerfers, umfassend einen Reflektor (3), in welchem die Lichtstrahlungsquelle (1) angeordnet ist und der frontal durch eine Scheibe (5) aus transparentem Material abgedeckt ist, dadurch gekennzeichnet, daß die Fortsätze (12) der brechenden Oberfläche (10) auf der inneren reflektierenden Oberfläche des Reflektors ausgebildet sind.

15. Beleuchtungseinrichtung nach einem der vorangehenden Ansprüche, dadurch gekennzeichnet, daß die brechenden Fortsätze (12) der brechenden Oberfläche (10) auf einem Stützelement aus Kunststoffmaterial ausgebildet sind.

## Revendications

1. Dispositif d'éclairage, en particulier pour la fabrication d'un phare de véhicule automobile, comportant au moins une source de radiation lumineuse (1) et susceptible d'engendrer un flux lumineux ayant une distribution d'intensité souhaitée suivant un angle solide prédéterminé (2), caractérisé en ce qu'il comporte au moins une surface de diffraction (10) interposée sur le trajet suivi par ladite radiation lumineuse dans ledit dispositif, ladite surface de diffraction étant du type à modulation de phase, et comportant une pluralité de saillies de diffraction (12) ayant une hauteur (h) s'étendant pratiquement entre la longueur d'onde de ladite radiation lumineuse et plusieurs dizaines de fois la longueur d'onde de ladite radiation.

2. Dispositif d'éclairage selon la revendication 1, caractérisé en ce qu'au moins une partie de ladite surface de diffraction (10) est du type binaire, dans laquelle lesdites saillies de diffraction (12) ont la même hauteur (h) de l'ordre de la longueur d'onde de ladite radiation lumineuse.

3. Dispositif d'éclairage selon la revendication 2, caractérisé en ce qu'au moins une partie de ladite surface de diffraction (10) est du type binaire à coefficient multiple.

4. Dispositif d'éclairage selon la revendication 2 ou 3, caractérisé en ce que ladite surface de diffraction binaire (10) est du type bidimensionnelle.

5. Dispositif d'éclairage selon la revendication 1, caractérisé en ce que ladite surface de diffraction est du type à ordre multiple continu (10) dans lequel lesdites saillies de diffraction (12) ont une hauteur de l'ordre de plusieurs dizaines de fois la longueur d'onde de ladite radiation lumineuse.

6. Dispositif d'éclairage selon l'une quelconque des revendications précédentes, caractérisé en ce que ladite surface de diffraction (10) comporte au moins une partie purement binaire d'une surface de diffraction susceptible d'émettre, suivant ledit angle solide prédéterminé, une radiation lumineuse appartenant aux ordres de diffraction symétriques positifs et négatifs, en utilisant également ainsi la radiation lumineuse appartenant aux ordres de diffraction négatifs pour engendrer ledit flux.

7. Dispositif d'éclairage selon l'une quelconque des revendications précédentes, caractérisé en ce que ladite surface de diffraction (10) comporte au moins une partie de la surface de diffraction capable de former une combinaison de lentilles à foyers multiples capables de focaliser les parties souhaitées dudit flux lumineux en des points prédéterminés sur un axe optique.

8. Dispositif d'éclairage selon l'une quelconque des revendications précédentes 1 à 7, caractérisé en ce que ladite surface de diffraction (10) comporte une combinaison d'éléments de diffraction disposés à proximité les uns des autres, chaque élément ayant des saillies selon l'un des types définis par l'une des revendications 2 à 5.

9. Dispositif d'éclairage selon l'une quelconque des revendications précédentes, caractérisé en ce qu'il comporte une combinaison desdites parties des surfaces de diffraction (10) d'un des types définis par l'une des revendications 6 et 7.

10. Dispositif d'éclairage selon la revendication 8 ou 9, caractérisé en ce qu'au moins l'un desdits éléments de diffraction est orienté de manière à former un angle prédéterminé avec un élément adjacent.

11. Dispositif d'éclairage selon l'une quelconque des revendications précédentes, capable d'être utilisé pour fabriquer un phare de véhicule automobile, comportant un réflecteur (3) dans lequel est disposée ladite source de radiation lumineuse (1) et qui est recouvert à l'avant par un écran (5) en matériau transparent, caractérisé en ce que lesdites saillies (12) de ladite surface de diffraction (10) sont formées sur la surface interne dudit écran (5) en matériau transparent.

12. Dispositif d'éclairage selon l'une des revendications 1 à 10 capable d'être utilisé pour fabriquer un phare de véhicule automobile, comportant un réflecteur (3), dans lequel est disposée ladite source de radiation lumineuse (1) et qui est recouvert à l'avant par un écran de protection (5) en matériau transparent, caractérisé en ce que lesdites saillies (12) de ladite surface de diffraction (10) sont formées sur une surface d'un écran de support (32) en matériau transparent disposé entre ladite source de radiation lumineuse et ledit écran de protection.

13. Dispositif d'éclairage selon la revendication 12, caractérisé en ce que ledit écran de support (32) est conformé de manière à former une lentille de réfraction.

14. Dispositif d'éclairage selon l'une quelconque des revendications 1 à 10, pouvant d'être utilisé pour fabriquer un phare de véhicule automobile, comportant un réflecteur (3) dans lequel est disposée ladite source de radiation lumineuse (1) et qui est recouvert à l'avant par un écran (5) en matériau transparent, caractérisé en ce que lesdites saillies (12) de ladite surface de diffraction (10) sont formées sur la surface réfléchissante intérieure dudit réflecteur.

15. Dispositif d'éclairage selon l'une quelconque des revendications précédentes, caractérisé en ce que lesdites saillies de diffraction (12) de ladite surface de diffraction (10) sont formées sur un élément de support réalisé en matière plastique.
